Europäisches Patentamt

European Patent Office

Office européen des brevets

(19)

(11) Numéro de publication: **0 338 610 B1**

(12) **FASCICULE DE BREVET EUROPEEN**

(45) Date de publication de fascicule du brevet: **22.12.93** �localhost (51) Int. Cl.⁵: **H02K 19/06**, H02K 19/10

(21) Numéro de dépôt: **89200839.2**

(22) Date de dépôt: **03.04.89**

(54) Machine électrique synchrone à réluctance, pourvue de moyens intrinséques de mise en phase.

(30) Priorité: **21.04.88 IT 6737088**

(43) Date de publication de la demande:
**25.10.89 Bulletin 89/43**

(45) Mention de la délivrance du brevet:
**22.12.93 Bulletin 93/51**

(84) Etats contractants désignés:
**AT BE CH DE ES FR GB LI NL SE**

(56) Documents cités:
**EP-A- 0 126 997**
**EP-A- 0 289 075**

**IEEE ANNUAL TEXTILE INDUSTRY TECHNI-CAL CONFERENCE, 4-5 Mai 1988, pages 14-18, New York, US; R. PETIT et al : "Synchronous ac motors for process control over wide speed ranges"**

**IEEE IND. APPLICATION SOCIETY 1985, Conf. Ree. 1985 Annual Meeting IEEE, pages 770-776, New York, US: A. EL ANTABLY et al.: "The design and steady-state performance of a high-efficiency reluctance motor"**

(73) Titulaire: **Fratta, Antonino, Dr. Ing.**
**Via Le Chiuse 99**
**I-10144 Torino(IT)**

(72) Inventeur: **Fratta, Antonino, Dr. Ing.**
**Via Le Chiuse 99**
**I-10144 Torino(IT)**

(74) Mandataire: **Patrito, Pier Franco, Dr. Ing.**
**Cabinet PATRITO BREVETTI**
**Via Don Minzoni 14**
**I-10121 Torino (IT)**

# Description

La présente invention a pour objet une machine électrique synchrone à réluctance alimentée par un circuit électronique de puissance avec contrôle vectoriel du courant d'alimentation.

L'ensemble constitué par une machine électrique à courant alternatif (et donc aussi, en particulier, par une machine synchrone à réluctance), par son circuit électronique d'alimentation (inverseur) et par le correspondant circuit de contrôle vectoriel (en module et en phase) du courant d'alimentation, ne peut pas être projeté, suivant l'état de la technique précédent la présente invention, de sorte à exploiter de la meilleure façon, à la fois, les caractéristiques de la machine et celles de l'inverseur. On constate en effet que, si l'on veut exploiter opportunément les caractéristiques de l'inverseur, la machine doit être dimensionnée comme si elle devait débiter une puissance maximum plus grande que celle que l'inverseur permettra réellement de débiter, tandis qu'au contraire, si l'on veut exploiter opportunément les caractéristiques de la machine, c'est l'inverseur qui doit être dimensionné comme si la puissance maximum à débiter était plus grande que celle dont la machine est capable. Cela est particulièrement onéreux dans le cas (très fréquent) où l'on demande que la machine soit capable de débiter un couple constant (correspondant à une valeur maximum préfixée) aux vitesses inférieures à une vitesse intermédiaire à laquelle correspond le débit, au couple constant préfixé, d'une puissance correspondante à une valeur maximum de puissance préfixée, et qu'elle soit capable de débiter une puissance constante (correspondant à ladite valeur de puissance préfixée) dans un champ étendu de vitesses plus grandes que ladite vitesse intermédiaire. Afin que cela soit possible, l'inverseur doit être proportionné de sorte à pouvoir débiter le courant nominal, nécessaire pour produire le couple maximum préfixé, ainsi que la tension maximum, qui est requise pour débiter la puissance maximum préfixée jusqu'à la vitesse maximum. Le produit du courant nominal par la tension maximum constitue une puissance dite "de proportionnement" pour laquelle on doit dimensionner l'inverseur, et elle peut être bien plus grande que la puissance mécanique maximum préfixée à debiter.

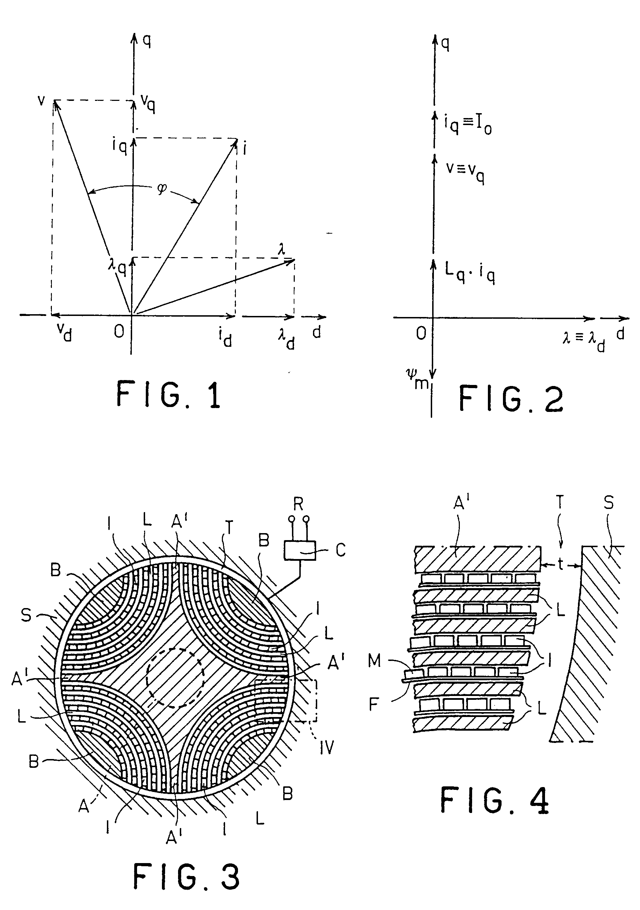

Cela se comprend en faisant référence au diagramme vectoriel de la figure 1. On doit dire d'abord que la distribution de force magnétomotrice sinusoïdale produite par le stator enroulé de la machine peut être considérée comme décomposée en deux distributions sinusoïdales orientées respectivement suivant l'axe direct (d) et suivant l'axe de quadrature (q) du rotor, lesquelles à leur tour peuvent être considérées comme produites par deux distributions de conducteurs parcourues par des courants respectifs $i_d$ et $i_q$. Les fluxes magnétiques $\lambda_d$ et $\lambda_q$ auto-concaténés par les deux enroulements suivant les axes d et q, qui correspondent auxdites distributions de conducteurs, sont définis par le produit des courants respectifs $i_d$ et $i_q$ par les auto-inductances respectives $L_d$ et $L_q$, lesquelles sont caractéristiques de la construction magnétique du rotor: $\lambda_d = L_d \cdot i_d$ , $\lambda_q = L_q \cdot i_q$ , et les vecteurs globaux de courant (i) et de flux magnétique ( $\lambda$ ) résultent des sommes vectorielles des composantes respectives ($i_d$, $i_q$ et $\lambda_d$, $\lambda_q$) suivant les axes d et q du rotor. Si l'on appelle $\omega$ la vitesse angulaire du rotor par rapport au stator, l'analyse du système montre que, en négligeant les chutes résistives et en considérant des conditions stationnaires de l'état magnétique, le vecteur v de tension, qui est capable d'imprimer dans le stator le vecteur i de courant, est en avance et en quadrature par rapport au vecteur de flux $\lambda$. L'angle entre les vecteurs v et i est $\phi$. Si l'on appelle T le couple mécanique produit, et donc $\omega \cdot T$ la puissance mécanique débitée, on trouve que la puissance électrique apparente absorbée est $v \cdot i$, la puissance électrique active absorbée est $v \cdot i \cdot \cos \phi = \omega \cdot T$ , et le module de la tension v nécessaire pour produire les fluxes magnétiques considérés est $v = \omega \sqrt{\lambda_d{}^2 + \lambda_q{}^2}$. L'expression du couple, valable en général, est $T = \lambda_d \cdot i_q - \lambda_q \cdot i_d$ .

On peut démontrer que le couple maximum qui peut être produit sans dépasser une tension maximum $V_M$ est obtenue lors que $|\lambda_d| = |\lambda_q| = = V_M /\omega\sqrt{2}$ et qu'elle a la valeur $T_{max} = (1/L - 1/L_d) \cdot V_M{}^2 / 2 \omega^2$ ; la puissance maximum est $P_{max} = (1/L_q - 1/L_d) \cdot V_M{}^2 / 2 \omega$ . Par conséquent la tension maximum $V_M$ que l'on doit appliquer pour obtenir la puissance $P_{max}$ augmente avec l'augmentation de la vitesse angulaire maximum $\omega$ à laquelle ladite puissance doit pouvoir être débitée, à savoir de l'étendue du champ de fonctionnement à puissance constante. Si $I_o$ est le courant nominal attribué à la machine, la puissance de proportionnement (en base à laquelle on doit dimensionner l'inverseur) est $V_M \cdot I_o$ : elle est bien plus grande que la puissance mécanique $\omega \cdot T$ pouvant être débitée par l'ensemble, et elle augmente avec l'étendue du domaine de vitesses de fonctionnement à puissance constante exigé.

En considérant ce qui précède, le but de la présente invention est de rendre possible une exploitation plus avantageuse des caractéristiques de l'ensemble comprenant une machine électrique à réluctance et le circuit électronique de puissance coordonné pour son alimentation (inverseur), en évitant la nécessité de dimensionner ce dernier pour une puissance de proportionnement bien plus grande que la puissance active exigée. La conception sur laquelle est basée l'invention est de donner au rotor une structure particulière, comme conséquence de laquelle, en des conditions nominales de fonctionnement, on peut réduire (tendant à l'annulation) le flux magnétique suivant l'axe de quadrature, lequel contribue d'une façon négative à la production du couple, et auquel correspond une composante de tension suivant l'axe direct, qui augmente la valeur de la tension dans la production d'une puissance mécanique.

Le but de l'invention est atteint par une machine électrique synchrone à réluctance, avec un stator et avec un rotor du type à segmentation magnétique axiale comprenant des couches axiales de matériau ferromagnétique alternées à des couches intercalaires de matériau non ferromagnétique, caractérisée en ce que des aimants permanents sont insérés dans lesdites couches intercalaires, avec une orientation telle à produire un flux magnétique suivant la direction de l'axe de quadrature et en sens opposé au flux magnétique produit par la composante de quadrature du courant qui parcourt le stator.

De préférence lesdits aimants permanents sont proportionnés de sorte que le flux magnétique produit par eux soit égale en valeur absolue et opposé en sens au flux magnétique produit par la composante de quadrature du courant qui parcourt le stator, lors que ce courant correspond aux conditions de fonctionnement nominal de la machine.

Grâce à cette disposition, la composante de flux magnétique présente dans le rotor suivant son axe de quadrature est en tous cas plus réduite que celle qu'on trouverait dans l'absence des caractéristiques suivant l'invention et, dans le cas du proportionnement préféré indiqué ci-dessus, elle peut être tout à fait annulée dans le fonctionnement nominal de la machine. Par conséquent est plus réduite, ou respectivement annulée, la composante de la force controélectromotrice produite par ledit flux magnétique dans le stator par action de la rotation du rotor, laquelle doit être contrastée par une composante suivant l'axe direct de la tension appliquée au stator, afin qu'on puisse imprimer dans le stator le courant nécessaire pour le fonctionnement de la machine. Etant réduite la composante suivant l'axe direct de la tension à appliquer, aussi le module de cette tension est réduit, et donc on peut réduire le dimensionnement de l'inverseur. A la limite, à savoir lors qu'on adopte le proportionnement préféré indiqué ci-dessus, l'inverseur demande d'être dimensionné seulement pour la puissance active qui corresponde à la puissance mécanique débitée par la machine à pleine charge.

En effet, comme on l'observe par le diagramme vectoriel de la figure 2, lequel se réfère au proportionnement préféré indiqué ci-dessus et suppose une composante négligeable de courant direct (comme en effet il s'avère dans le fonctionnement à haute vitesse et avec un flux réduit), si l'on dit $\psi_M$ la valeur absolue du flux magnétique produit par les aimants permanents, la composante du flux magnétique suivant l'axe de quadrature est égale à $\lambda_q = L_q \cdot i_q - \psi_M$ et, si en base au proportionnement préféré on a choisi $\psi_M = L_q \cdot I_o$, cette composante $\lambda_q$ est annulée dans le fonctionnement de la machine sous le courant nominal $I_o$. Dans ces conditions le flux magnétique total $\lambda$ est égal à la composante $\lambda_d$ du flux magnétique et il est orienté suivant l'axe direct, la composante $i_q$ du courant suivant l'axe de quadrature est égale au courant nominal $I_o$, et la tension totale appliquée est égale à sa composante suivant l'axe de quadrature: $v = \omega \cdot \lambda = v_q$ et elle est orientée suivant l'axe de quadrature. Il n'y a aucune différence de phase $\phi$ entre la tension et le courant (c'est à dire que la machine, dans ces conditions, est complètement mise en phase), la puissance électrique apparente est égale à la puissance électrique active et à la puissance mécanique débitée, et donc l'inverseur peut être dimensionné en vue de cette dernière seulement.

Bien entendu, ces conditions ne sont pas vérifiées dans le fonctionnement sous un courant plus réduit que le courant nominal ainsi que si l'on tient compt de conditions non stationnaires du circuit magnétique. De plus, en théorie on devrait tenir compte de la composante $i_d$ du courant suivant l'axe direct, laquelle d'autre part, dans une machine à réluctance à segmentation magnétique axiale, est bien plus réduite que la composante de quadrature $i_q$, de sorte qu'elle modifie très peu les conclusions dont ci-dessus.

La mise en phase de la machine est atteinte dû au flux magnétique produit par les aimants permanents, lequel doit être proportionné à la composante de flux magnétique produite par le courant suivant l'axe de quadrature. Il est donc avantageux, aux fins du dimensionnement des aimants permanents, que l'autoinductance $L_q$ du rotor suivant l'axe de quadrature soit la plus réduite possible. D'autre part, la composante du courant suivant l'axe direct, nécessaire pour produire le flux, se comporte comme un terme non correspondant au cas idéal de la figure 2, et par conséquent il est avantageux que l'autoinductance $L_d$ du rotor suivant l'axe direct soit la plus élevée possible. En résumé des deux conditions exposées, il est avantageux que le rapport $L_q / L_d$ soit le plus réduit possible. Il est donc avantageux que pour le rotor on adopte une structure appropriée et, en particulier, une structure du genre de celle qui est décrite dans la publication de demande de Brevet Européen No. 289.075, laquelle est composée par une segmentation magnétique axiale comprenant des couches de matériau ferromagnétique alternées à des couches de matériau non ferromagnétique dont l'épaisseur n'est pas plus réduit que 2/3 de l'épaisseur des couches de matériau ferromagnétique.

La machine électrique à réluctance appliquant les caractéristiques suivant cette invention est donc intrinsèquement mise en phase en correspondence du débit de la puissance mécanique désirée et préfixée.

Ces caractéristiques et autres et les avantages de l'objet de l'invention ressortiront plus clairement de la suivante description de certains modes de réalisation donnés à titre d'exemples non limitatifs et schématiquement représentés dans les dessins annexés, dans lesquels:

Fig. 1 montre un diagramme vectoriel, déjà discuté dans la prémisse, se référant à une machine suivant l'état précédent de la technique;

Fig. 2 montre un diagramme vectoriel, déjà discuté dans la premisse, se référant à une machine suivant l'invention;

Fig. 3 montre schématiquement un premier mode de réalisation de la structure d'une machine avec rotor à segmentation magnétique axiale partialisée, montrant les caractéristiques suivant l'invention;

Fig. 4 montre à une échélle plus grande le détail IV de la fig. 3;

Figs. 5 et 6 montrent, d'une façon similaire de la figure 3, deux autres modes de réalisation de la structure d'une machine montrant les caractéristiques suivant la présente invention; et

Fig. 7 montre des relations de dimensionnement appropriées entre les segmentations magnétiques du rotor et le pas des gorges du stator dans une machine suivant l'invention.

Faisant référence tout d'abord aux figures 3 et 4, la lettre S indique un stator, dont la structure n'est pas spécifiée parce qu'il peut s'agir de tout type de stator connu pour le genre de machines considéré ou pour d'autres genres de machines électriques synchrones ou asynchrones. En maints cas, mais sans engagement, il s'agit d'une structure à enroulement polyphasé distribué. On doit remarquer que la structure du stator S n'a en soi aucune relation avec l'application de l'invention.

Dans la figure 3 on a schématiquement indiqué que le stator S est connecté à un circuit d'alimentation C, interposé entre le stator S et un réseau d'alimentation R. Le circuit d'alimentation C doit être considéré comme constitué per un inverseur de puissance alimentant le stator S et par un circuit électronique de contrôle vectoriel (en module et en phase) du courant d'alimentation délivré par l'inverseur au stator. La structure du circuit C n'est pas spécifiée parce que de tels circuits de contrôle sont bien connus en soi pour l'application à d'autres genres de machines électriques et, en général, tout circuit de ce type peut être employé pour alimenter la machine électrique suivant l'invention.

Dans les figures 3 et 4, la référence T indique l'entrefer d'épaisseur t situé entre la surface interne du stator S et la surface de jupe du rotor. Le rotor représenté dans ces figures a quatre poles et il est pourvu d'un arbre A, par exemple en acier normal, lequel s'étend à former un support en croisillon avec quatre bras A', disposés suivant les deux axes directs du rotor. Dans les quatres quadrants définis par les quatre bras A' de l'arbre A sont insérées quatre laminations axiales courbes, dont la structure est bien connue pour ce type de machines, et chacune desquelles comprend nombre de tôles ferromagnétiques L alternées à des couches intercalaires non ferromagnétiques I. Suivant l'enseignement de la demande de Brevet Européen No. 289.075, ces couches intercalaires non ferromagnétiques I ont une épaisseur substantielle, au moins non inférieure à 2/3 de l'épaisseur des tôles ferromagnetiques L.

Suivant la caractéristique de la présente invention, des aimants permanents M (figure 4) sont insérés dans les couches intercalaires I disposées entre les tôles ferromagnétiques L. Chaque aimant permanent M est magnétisé suivant une orientation perpendiculaire au plan tangent à la couche intercalaire I dans le point où se trouve l'aimant permanent considéré, et avec un sens tel que tous les aimants permanents d'un quadrant produisent, dans leur ensemble, un flux magnétique suivant la direction de l'axe de quadrature traversant ledit quadrant, en sens opposé au flux magnétique produit dans ce quadrant par la composante de quadrature du courant parcourant le stator.

En vue de ce qu'on a expliqué ci-dessus avec référence au diagramme vectoriel de la figure 2, par cette disposition la composante de flux magnétique présente dans le rotor suivant ses axes de quadrature est plus réduite de la composante qui serait présente dans l'absence des aimants permanents M. Par conséquence la composante suivant l'axe direct de la tension que le circuit d'alimentation doit appliquer au stator est réduite, le module de ladite tension est réduit lui-aussi, et l'on peut réduire le dimensionnement de l'inverseur faisant partie du circuit d'alimentation C.

De préférence les caractéristiques des aimants permanents M sont choisies de sorte que le flux magnétique produit par eux soit approximativement égal en valeur absolue et opposé en sens au flux magnétique produit par la composante de quadrature du courant parcourant le stator, lors que ce courant correspond aux conditions de fonctionnement nominal de la machine. Dans ce cas préféré, comme on l'a déjà éclairci avec référence au diagramme vectoriel de la figure 2, il est suffisant que l'inverseur soit dimensionné pour une valeur voisine de la seule puissance active, correspondant à la puissance mécanique débitée par la machine à pleine charge.

Dans la partie centrale de chaque lamination courbe L,I est disposé un élément B, lequel pour des raisons de structure et de construction n'est pas segmenté; il détermine l'un des espaces interpolaires du rotor. Dans l'application de la présente invention, les éléments B sont réalisés de préférence en un matériau ferromagnétique, dans le but de supporter la distribution d'induction magnétique à l'entrefer produite par les aimants permanents.

Du point de vue de la construction, la distribution des aimants permanents M insérés dans les couches intercalaires I qui, dans ce cas, sont courbes, peut être réalisée en appliquant nombre d'aimants permanents M de dimensions réduites sur une feille de support flexible F (figure 4). La pliabilité de cette feuille de support rend possible de disposer sans difficulté une couche d'aimants permanents M entre deux tôles ferromagnétiques L, malgré que ces dernières soient courbes.

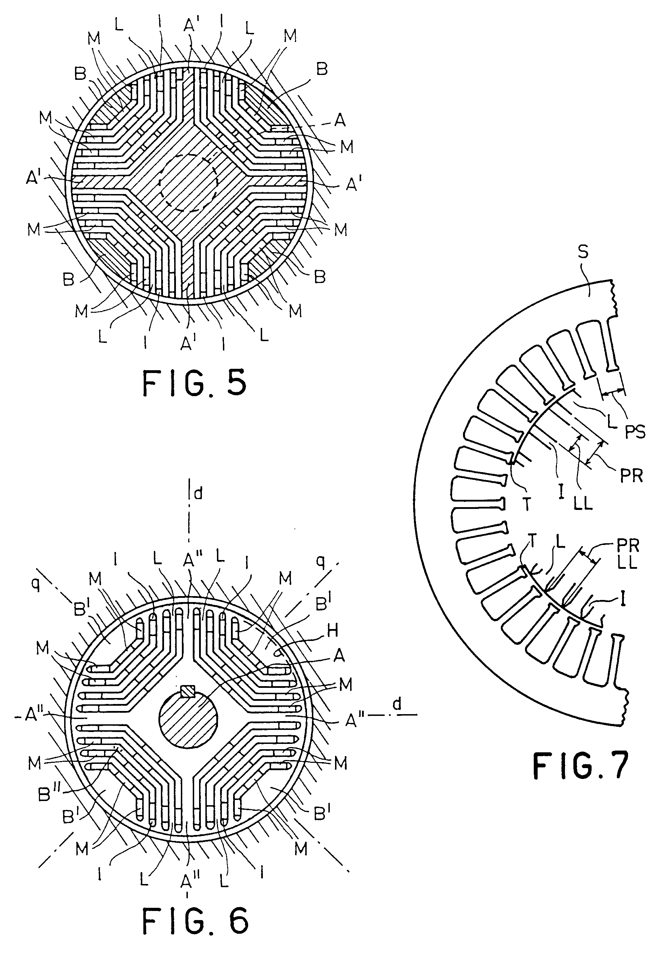

Dans la forme de réalisation suivant la figure 5, les tôles ferromagnétiques L faisant partie des laminations axiales ne sont pas courbes, mais elles sont pliées en forme polygonale. Dans ce cas les espaces intercalaires I sont eux-aussi constitués par des segments plats, et des aimants permanents M sous forme de plaques plates peuvent être insérés facilement dans les couches intercalaires I. Comme on le remarque par la figure 5, le nombre d'aimants permanents constituant chaque couche peut être différent du nombre d'aimants permanents inclus dans les autres couches. Cela autorise la réalisation de la force magnétomotrice la plus appropriée dans chaque couche. Toutefois, au lieu de modifier le nombre d'aimants permanents dans les diverses couches, il est aussi possible d'employer dans les diverses couches des aimants permanents ayant des caractéristiques différentes.

Du point de vue magnétique, les segmentations du rotor doivent se développer en direction axiale pour déterminer des espaces intercalaires ayant extension axiale, capables de recevoir les distributions d'aimants permanents caractéristiques de l'invention. Dans ce but, suivant les figures 3 à 5 les laminations du rotor comprennent des tôles ferromagnétiques qui se développent matériellement en direction axiale. Toutefois il est aussi possible d'obtenir des segmentations magnétiquement axiales en faisant usage de tôles ferromagnétiques qui, matériellement, constituent une lamination transversale, à la condition que ces tôles soient pourvues de guides de flux sous la forme de cavités profilées de façon appropriée. Un exemple d'une telle structure est donné par la figure 6. Dans ce cas le rotor comprend un paquet de tôles ferromagnétiques transversales, circulaires, superposées suivant l'axe d'un arbre A et calées sur cet arbre. Dans les tôles ferromagnétiques sont découpées des cavités allongées qui définissent les couches intercalaires I non ferromagnétiques, entre lesquelles se trouvent les parties ferromagnétiques L qui, dans l'ensemble des tôles, définissent des couches axiales de matériau ferromagnétique. De cette façon, moyennant une construction à lamination matériellement transversale, qui est préférable pour la construction, on réalise un comportement magnétiquement équivalent à celui des laminations axiales décrites auparavant. Les parties ferromagnétiques qui, dans les structures précédentes, étaient formées par les bras A' de l'arbre A et par les éléments B définissant les espaces interpolaires, sont représentées dans cette structure par des régions correspondantes A'' et B' des tôles transversales constituant les couches ferromagnétiques L.

Comme on peut le remarquer par la même figure 6, dans le mode de réalisation qui y est représenté les cavités ou guides de flux découpées dans les tôles et déterminant les espaces intercalaires ne s'étendent pas jusqu'à la périphérie du rotor, mais elles se terminent à une courte distance de celle-ci, de sorte que le long de la périphérie du rotor il y a une série de petits ponts ferromagnétiques qui ferment les cavités constituant guides de flux. En d'autres formes de réalisation de tels petits ponts peuvent être prévus, au lieu ou en plus qu'à la périphérie du rotor comme représenté dans la figure 6, en d'autres positions, et particulièrement en des positions internes comme celle B''.

De telles structures sont en soi bien connues dans les machines à réluctance, et leur but est d'assurer au rotor une résistance mécanique suffisant pour résister aux forces centrifuges qui surgissent pendant la rotation, tout sans avoir recours à un frettage du rotor par un matériau ayant une forte charge de rupture, comme les fibres de carbone. Le frettage n'est pas souhaitable, à part les raisons économiques, en ce qu'il augmente l'épaisseur de l'entrefer magnétique par rapport à l'entrefer géométrique.

Toutefois, d'autre côté, une structure comprenant des petits ponts ferromagnétiques, périphériques ou internes au rotor, représente dans les machines connues un inconvénient grave, parce que ces ponts augmentent considérablement la perméance magnétique suivant les axes de quadrature, et cela, en outre, d'une façon non linéaire en fonction de la charge débitée, en vue du différent degré de saturation magnétique atteint par ces ponts. Dans les machines connues, le flux magnétique parcourant et, éventuellement, saturant lesdits ponts doit être produit par le courant de charge, et donc il influence négativement le comportement du circuit d'alimentation.

Au contraire, avec la structure suivant l'invention on peut prévoir des petits ponts ferromagnétiques, périphériques ou internes au rotor, sans introduire aucun inconvénient, parce que ces ponts (pourvu que leur section est opportunément limitée) peuvent être magnétiquement saturés par action des aimants permanents insérés dans les couches intercalaires. Bien entendu, dans ce cas il faut tenir compte de la présence des petits ponts ferromagnétiques lors du proportionnement des aimants permanents insérés dans les couches intercalaires, lesquels, en plus de produire le flux magnétique nécessaire pour réduire ou annuler la composante suivant l'axe direct de la tension à appliquer, doivent aussi produire le flux magnétique nécessaire pour saturer les petits ponts ferromagnétiques. Lors qu'ils sont ainsi saturés par les aimants permanents, les petits ponts se comportent par rapport aux autres fluxes magnétiques comme un matériau non ferromagnétique et, s'ils sont périphériques, ils constituent un prolongement idéal, jusqu'à l'entrefer, des espaces intercalaires non ferromagnétiques. Le circuit électronique de puissance et le circuit de contrôle n'éprouvent alors aucun inconvénient par la présence des ponts.

Une possibilité similaire peut être exploitée, dans le cas d'une lamination matériellement axiale, en frettant le rotor par un matériau ferromagnétique (comme schématisé en H, figure 6), et pourvoyant à la saturation magnétique des régions du frettage qui correspondent aux espaces intercalaires et qui forment comme des petits ponts ferromagnétiques, par action des aimants permanents insérée dans lesdits espaces intercalaires. Cela permet di réaliser des frettages plus économiques et qui n'augmentent pas l'épaisseur de l'entrefer magnétique par rapport à l'entrefer géométrique.

Pour réaliser le comportement optimal du matériau ferromagnétique du rotor, il est à propos que la réluctance du circuit magnétique intéressant chaque segmentation magnétique du rotor demeure substantiellement constante pendant les variations de la position du rotor par rapport au stator, et cela malgré que le stator soit anisotrope dû à la présence des gorges dans lesquelles sont montés les enroulements. Dans ce cas la force magnétomotrice des aimants insérés dans les couches intercalaires du rotor ne donne lieu à aucune variation substantielle de l'induction magnétique dans les couches ferromagnétiques du rotor pendant sa rotation. Cette condition peut être atteinte, suivant une caractéristique de l'invention, si l'extension de la couche ferromagnétique de chaque segmentation magnétique du rotor, mesurée le long de l'entrefer, est égale au pas des gorges du stator, mesuré lui-aussi le long de l'entrefer. En effet, dans ces conditions, chaque couche ferromagnétique du rotor, dans toute position, fait toujours face à une extension égale du matériau ferromagnétique du stator.

Comme le montre le schéma de la figure 7, à cette condition générale peuvent correspondre deux conditions différentes de proportionnement, selon que les couches intercalaires faisant partie des segmentation magnétiques du rotor sont ouvertes vers l'entrefer (comme suivant la figure 5), ou bien elles sont fermées vers l'entrefer (comme suivant la figure 6).

Dans le cas où les couches intercalaires I des segmentations magnétiques du rotor sont substantiellement ouvertes vers l'entrefer (partie supérieure de la figure 7), quel que soit le pas PR des segmentations du rotor, on atteint la condition désirée lors que la largeur LL (mesurée en correspondance de l'entrefer) des éléments ferromagnétiques L est égale au pas PS des gorges du stator (mesuré, lui-aussi, en correspondance de l'entrefer), ou bien à un multiple de ce pas, et cela indépendamment de la largeur des couches intercalaires I.

Dans le cas où les couches intercalaires I des segmentations magnétiques du rotor sont substantiellement fermées vers l'entrefer (partie inférieure de la figure 7), quelle que soit la largeur des éléments ferromagnétiques L entre lesquels se trouvent les couches intercalaires non ferromagnétiques I, on atteint la condition désirée lors que le pas PR des segmentations magnétiques du rotor (mesuré en correspondance de l'entrefer) est égal au pas PS des gorges du stator (mesuré, lui-aussi, en correspondance de l'entrefer), ou bien à un multiple de ce pas. Comme on le comprend, il s'agit ici d'un cas particulier de la condition précédente, valable lors que la largeur des couches intercalaires I est nulle en correspondance de l'entrefer, de sorte que (seulement en correspondance de l'entrefer) la largeur LL des couches ferromagnétiques occupe tout entier le pas PR des segmentations magnétiques du rotor.

Cette condition est pratiquement valable lors que les couches intercalaires I des segmentations magnétiques du rotor, tout n'étant pas vraiment fermées vers l'entrefer, sont conformées de sorte à présenter en correspondance de l'entrefer une petite extension, du même ordre de grandeur de l'épaisseur de l'entrefer lui-même.

Le technicien qui doit projeter la machine dispose donc de deux possibilités, entre lesquelles il peut choisir suivant les exigences de construction; de plus il faut tenir présent que les conditions indiquées demandent d'être respectées seulement par approximation, si l'on tient compte du fait que les lignes d'induction magnétique sont capables d'une certaine divergence lors qu'elles traversent l'entrefer.

Grâce à la prévision des moyens intrinsèques de mise en phase décrits, la machine électrique synchrone à réluctance suivant l'invention autorise la construction d'ensembles, comprenant la machine elle-même et son circuit électronique d'alimentation avec contrôle vectoriel du courant, dans lesquels soit les caractéristiques de la machine, soit les caractéristiques de l'inverseur faisant partie du circuit d'alimentation, peuvent être exploitées de la façon la plus avantageuse.

**Revendications**

1. Machine électrique synchrone à réluctance, avec un stator (S) et avec un rotor du type à segmentation magnétique axiale comprenant des couches axiales (L) de matériau ferromagnétique alternées à des couches intercalaires (I) de matériau non ferromagnétique, caractérisée en ce que des aimants permanents (M) sont insérés dans lesdites couches intercalaires (I), avec une orientation telle à produire un flux magnétique suivant la direction de l'axe de quadrature (q) et en sens opposé au flux magnétique produit par la composante de quadrature du courant qui parcourt le stator (S).

2. Machine à réluctance suivant la revendication 1, caractérisée en ce que lesdits aimants permanents (M) sont proportionnés de sorte que le flux magnétique produit par eux soit au moins approximativement égale en valeur absolue et opposé en sens au flux magnétique produit par la composante de quadrature du courant qui parcourt le stator, lors que ce courant correspond aux conditions de fonctionnement nominal de la machine.

3. Machine à réluctance suivant la revendication 1, caractérisée en ce que les éléments (B) disposés au centre des segmentations magnetiques (L,I), définissant les espaces interpolaires du rotor, sont en matériau ferromagnétique.

4. Machine à réluctance suivant la revendication 1, caractérisée en ce que lesdites segmentations magnétiques (L,I) comprennent des tôles ferromagnétiques (L) qui se développent matériellement dans la direction axiale (figures 3-5).

5. Machine à réluctance suivant la revendication 1, caractérisée en ce que lesdites segmentations magnétiques (L,I) comprennent des tôles ferromagnétiques (L) qui se développent matériellement dans la direction transversale et qui sont pourvues de guides de flux (I), définissant des couches magnétiquement axiales (figure 6).

6. Machine à réluctance suivant la revendication 1, caractérisée en ce que lesdits aimants permanents sont constitués par des plaques (M) de dimensions limitées, appliquées sur des feuilles flexibles (F) de support (figure 4).

7. Machine à réluctance suivant la revendication 1, caractérisée en ce que lesdits aimants permanents (M) insérée dans les couches intercalaires (I) sont en nombre différent, ou bien ont des caractéristiques différentes, de couche à couche.

8. Machine à réluctance suivant la revendication 1, caractérisée en ce que les couches (L) de matériau ferromagnétique des segmentations magnétiques (L,I) sont joints entre eux, périphériquement ou intérieurement au rotor, par des petits ponts ferromagnétiques, et que lesdits aimants permanents (M) sont proportionnés de sorte à produire aussi un flux magnétique servant à saturer magnétiquement lesdits ponts.

9. Machine à réluctance suivant les revendications 4 et 8, caractérisée en ce que lesdites tôles ferromagnétiques (L) qui s'étendent matériellement en direction axiale sont pourvues d'un frettage en matériau ferromagnétique dont les régions qui correspondent aux couches intercalaires (I), constituant des petits ponts ferromagnétiques, sont magnétiquement saturées par action desdits aimants permanents (M).

10. Machine à réluctance suivant les revendications 5 et 8, caractérisée en ce que lesdites tôles ferromagnétiques (L) qui s'étendent matériellement en direction transversale et sont pourvues de guides de flux (I) déterminant des couches axiales de matériau ferromagnétique montrent lesdits petits ponts ferromagnétiques, périphériques ou internes au rotor, magnétiquement saturées par action desdits aimants permanents (M), disposés de façon à assurer la résistance mécanique du rotor.

11. Machine à réluctance suivant la revendication 1, ayant lesdites couches intercalaires (I) non ferromagnétiques substantiellement ouvertes vers l'entrefer (T), caractérisée en ce que la largeur (LL) des couches (L) de matériau ferromagnétique, mesurée en correspondance de l'entrefer (T), est au moins approximativement égale au pas (PS) des gorges du stator (S), mesuré en correspondance de l'entrefer, ou à un multiple de ce pas.

**12.** Machine à réluctance suivant la revendication 1, ayant lesdites couches intercalaires (I) non ferromagnétiques substantiellement fermées vers l'entrefer (T), caractérisée en ce que le pas (PR) des segmentations magnétiques (L,I) du rotor, mesuré en correspondance de l'entrefer (T), est au moins approximativement égale au pas (PS) des gorges du stator (S), mesuré en correspondance de l'entrefer, ou à un multiple de ce pas.

**Claims**

**1.** A reluctance synchronous electric machine, comprising a stator (S) and a rotor of the type with axial magnetic segmentations comprising axial layers (L) of ferromagnetic material alternated with intercalary layers (I) of non-ferromagnetic material, characterized in that permanent magnets (M) are inserted within said intercalary non-ferromagnetic layers (I), with such an orientation as to produce a magnetic flux along the direction of the quadrature axis (q) and in the sense opposite the magnetic flux produced by the quadrature component of the current which feeds the stator (S).

**2.** A reluctance machine as set forth in Claim 1, characterized in that said permanent magnets (M) are proportioned in such a way that the magnetic flux produced by them is at least approximately equal in the absolute value and opposite in sense to the magnetic flux produced by the quadrature component of the current which feeds the stator when this current corresponds to the nominal operating conditions of the machine.

**3.** A reluctance machine as set forth in Claim 1, characterized in that the elements (B) located in the middle of the magnetic segmentations (L,I) which define the interpolar spaces of the rotor are of ferromagnetic material.

**4.** A reluctance machine as set forth in Claim 1, characterized in that said magnetic segmentations (L,I) comprise ferromagnetic sheets (L) materially extending in the axial direction (figures 3-5).

**5.** A reluctance machine as set forth in Claim 1, characterized in that said magnetic segmentations (L,I) comprise ferromagnetic sheets (L) materially extending in the transverse direction and which are provided with flux guides (I) which define magnetically axial layers (figure 6).

**6.** A reluctance machine as set forth in Claim 1, characterized in that said permanent magnets are in the form of plates (M) of small size applied onto flexible supporting sheets (F, figure 4).

**7.** A reluctance machine as set forth in Claim 1, characterized in that said permanent magnets (M) inserted within the various intercalary layers (I) change in their number or in their magnetic characteristics from each layer to each other.

**8.** A reluctance machine as set forth in Claim 1, characterized in that said layers (L) of ferromagnetic material of the magnetic segmentations (L,I) are mutually connected, peripherally or internally to the rotor, by ferromagnetic bridges, and in that said permanent magnets (M) are proportioned for further producing a magnetic flux capable of magnetically saturating said bridges.

**9.** A reluctance machine as set forth in Claims 4 and 8, characterized in that said ferromagnetic sheets (L) which materially extend in the axial direction are provided with a hooping of a ferromagnetic material, whose portions corresponding to the intercalary layers (I), forming ferromagnetic bridges, are magnetically saturated by said permanent magnets (M).

**10.** A reluctance machine as set forth in Claims 5 and 8, characterized in that said ferromagnetic sheets (L) which materially extend in a transverse direction and are provided with flux guides (I) defining axial layers of ferromagnetic material, comprise said bridges, peripheral and/or internal to the rotor and magnetically saturated by the action of said permanent magnets (M), located in such a way as to ensure the mechanical strength of the rotor.

**11.** A reluctance machine as set forth in Claim 1, having said intercalary non-ferromagnetic layers (I) substantially open towards the magnetic gap (T), characterized in that the width (LL) of the layers (L) of ferromagnetic material, measured at the magnetic gap (Y), is at least approximately equal to the pitch (PS) of the slots of the stator (S), measured at the magnetic gap (T), or to a multiple of this pitch.

**12.** A reluctance machine as set forth in Claim 1, having said intercalary non-ferromagnetic layers (I) substantially closed towards the magnetic gap (T), characterized in that the pitch (PR) of the magnetic segmentations (L,I) of the rotor, measured at the magnetic gap (T), is at least approximately equal to the pitch (PS) of the slots of the stator (S), measured at the magnetic gap (T), or to a multiple of this pitch.

**Patentansprüche**

1. Elektrische Reluktanz-Synchronmaschine mit einem Stator (S) und einem Rotor der aus axialen Magnetabschnitten bestehenden Bauart mit sich abwechselnden Axiallagen (L) aus ferromagnetischem Material und Zwischenlagen (I) aus nicht-ferromagnetischem Material, dadurch gekennzeichnet, dass in den Zwischenlagen (I) Dauermagnete (M) mit einer solcher Ausrichtung eingesetzt sind, dass ein Magnetfluss in Richtung der Quadratur-Achse (q) und in dem dem durch die Quadratur-Komponente des den Stator (S) durchfliessenden Stroms erzeugten Magnetfluss entgegengesetzten Sinn erzeugt wird.

2. Reluktanzmaschine nach Anspruch 1, dadurch gekennzeichnet, dass die Dauermagnete (M) so abgestimmt sind, dass der von ihnen erzeugte Magnetfluss dem durch die Quadratur-Komponente des den Stator (S) durchfliessenden Stroms erzeugten Magnetfluss wenigstens annähernd im Absolutwert und mit umgekehrtem Vorzeichen gleich ist, wenn dieser Strom den Nennbetriebsbedingungen der Maschine entspricht.

3. Reluktanzmaschine nach Anspruch 1, dadurch gekennzeichnet, dass die in der Mitte der die Zwischenpolräume des Rotors definierenden Magnetabschnitte (L,I) angeordneten Elemente (B) aus ferromagnetischem Material bestehen.

4. Reluktanzmaschine nach Anspruch 1, dadurch gekennzeichnet, dass die Magnetabschnitte (L,I) ferromagnetische Bleche (L) umfassen, die sich materiell in Axialrichtung erstrecken (Figuren 3-5).

5. Reluktanzmaschine nach Anspruch 1, dadurch gekennzeichnet, dass die Magnetabschnitte (L,I) ferromagnetische Bleche (L) umfassen, die sich materiell in Querrichtung erstrecken und mit Flussführungen (I) versehen sind, die magnetisch axiale Lagen definieren (Figur 6).

6. Reluktanzmaschine nach Anspruch 1, dadurch gekennzeichnet, dass die Dauermagnete aus Magnetplättchen (M) beschränkter Abmessungen bestehen, die an nachgiebigen Trägerfolien angebracht sind (Figur 4).

7. Reluktanzmaschine nach Anspruch 1, dadurch gekennzeichnet, dass die Anzahl der in den verschiedenen Zwischenlagen (I) eingesetzten Dauermagnete (M) veränderlich ist, oder dass die Dauermagnete von einer Lage zur anderen unterschiedliche magnetische Eigenschaften aufweisen.

8. Reluktanzmaschine nach Anspruch 1, dadurch gekennzeichnet, dass die aus ferromagnetischem Material bestehende Lagen (L) der Magnetabschnitte (L,I) am Umfang und/oder im inneren des Rotors durch ferromagnetische Stege miteinander verbunden sind, und dass die Dauermagnete (M) so dimensioniert sind, dass sie auch einen Magnetfluss liefern, der zur magnetischen Sättigung dieser Stege dient.

9. Reluktanzmaschine nach Ansprüche 4 und 8, dadurch gekennzeichnet, dass die sich materiell in Axialrichtung erstreckenden ferromagnetischen Bleche (L) eine Umhüllung aus ferromagnetischem Material aufweisen, deren den Zwischenlagen (I) entsprechenden und die ferromagnetischen Stege bildende Bereiche durch die Dauermagnete (M) magnetisch gesättigt werden.

10. Reluktanzmaschine nach Ansprüche 5 und 8, dadurch gekennzeichnet, dass die sich materiell in Querrichtung erstreckenden und mit die magnetischen Axiallagen definierenden Flussführungen (I) versehenen ferromagnetischen Bleche (L) am Umfang oder im Inneren des Rotors angeordnete Stege aufweisen, die durch die Dauermagnete (M) gesättigt werden und so angeordnet sind, dass die mechanische Festigkeit des Rotors gesichert wird.

11. Elektrische Reluktanz-Synchronmaschine nach Anspruch 1, deren nicht-ferromagnetischen Zwischenlagen (I) zum Luftspalt (T) hin im wesentlichen offen sind, dadurch gekennzeichnet, dass die im Bereich des Luftspaltes (T) gemessene Breite (LL) der Lagen (L) aus ferromagnetischem Material der im Bereich des Luftspaltes (T) gemessener Teilung (PS) der Nuten des Stators (S) oder einem Vielfachen dieser Teilung wenigstens annähernd gleich ist.

12. Elektrische Reluktanz-Synchronmaschine nach Anspruch 1, deren nicht-ferromagnetischen Zwischenlagen (I) zum Luftspalt (T) hin wenigstens annähernd geschlossen sind, dadurch gekennzeichnet, dass die im Bereich des Luftspaltes (T) gemessene Teilung (PR) der Magnetabschnitte (L,I) des Rotors der im Bereich des Luftspaltes (T) gemessener Teilung (PS) der Nuten des Stators (S) oder einem Vielfachen dieser Teilung wenigstens annähernd gleich ist.

FIG. 1

FIG. 2

FIG. 3

FIG. 4

EP 0 338 610 B1

FIG. 5

FIG. 6

FIG. 7